# EUROPEAN PATENT SPECIFICATION

(11) **EP 1 508 762 B1**
(45) Date of publication and mention of the grant of the patent: **30.05.2007**
(21) Application number: 04027040.7
(22) Date of filing: 06.12.2000
(51) Int. Cl.: C25C 3/08, F27D 23/04, C22B 9/05, C22B 21/06, C04B 41/50

(54) **Refractory material for use at high temperatures**
Feuerfestes Material für Hochtemperatur-Anwendungen
Materiau refractaire destiné a des usages à hautes temperatures

(30) Priority: 09.12.1999 WO PCT/IB99/01982; 25.10.2000 WO PCT/IB00/01551
(43) Date of publication of application: 23.02.2005
(62) Divisional of application: 00977811.9
(73) Proprietor: MOLTECH Invent S.A., 1520 Luxembourg (LU)
(72) Inventor: Nguyen, Thinh T., 1213 Onex (CH); Duruz, Jean-Jacques, 1204 Geneve (CH); De Nora, Vittorio, 3968 Veyras (CH)
(74) Representative: Cronin, Brian Harold John

(56) References cited:
- WO-A-00/36187
- US-A- 4 560 448
- US-A- 5 527 442

## Description

### Field of the Invention

The invention relates to components which are made of or coated with a refractory material for use at high temperature, in particular cathode blocks of cells for the electrowinning of aluminium from alumina dissolved in a cryolite-based molten electrolyte, arc electrodes of steel arc furnaces and components of molten metal purification apparatus.

### Background of the Invention

Carbonaceous materials are important engineering materials used in diverse applications such as aircraft bodies, electrodes, heating elements, structural materials, rocket nozzles, metallurgical crucibles, pump shafts, furnace fixtures, sintering trays, induction furnace susceptors, continuous casting dies, ingot moulds, extrusion canisters and dies, heat exchangers, anodes, high temperature insulation (porous graphite), gas diffusers, aerospace structural materials, bearings, substrates in electronics industry, brazing and joining fixtures, diamond wheel moulds, nozzles, glass moulds etc. Although carbonaceous materials have properties which make them useful for the applications mentioned above, the resistance to oxidation is one property which has limited the use of these materials. Much effort is therefore underway to improve the resistance to oxidation of such materials.

Traditional methods of protecting carbonaceous materials have involved the deposition of adherent and highly continuous layers of materials such as silicon carbide or metals such as aluminium. The deposit of such materials has normally been carried out by techniques such as vapour deposition (both PVD and CVD) or by electrochemical methods. Vapour deposition is an extremely slow and costly process and additionally may not be carried out for large parts such as electrodes. It is also known to plasma spray alumina/aluminium onto the sides of carbon anodes used as anodes for aluminium electrowinning, but this coating method is expensive. Other techniques such as electrochemical methods are limited in the type of materials that may be applied as coatings, and size limitations again may be present.

Various types of TiB₂ or RHM layers applied to carbon substrates have failed due to poor adherence and to differences in thermal expansion coefficients between the titanium diboride material and the carbon substrate.

Recently, protective coatings of refractory hard material applied from a slurry have been successfully used on carbon components, in particular cathodes of aluminium production cells. Such slurries have been disclosed in US Patent 5,364,513 (Sekhar/de Nora).

US Patent 5,651,874 (de Nora/Sekhar) describes a carbon-containing component of a cell for the production of aluminium by the electrolysis of alumina dissolved in a cryolite-based molten electrolyte, which cell component is protected from attack by liquid and/or gaseous components of the electrolyte or products produced during cell operation by a coating of particulate refractory hard metal boride and a colloid bonding applied from a slurry of the boride in a colloidal carrier which comprises at least one of colloidal alumina, silica, yttria, ceria, thoria, zirconia, magnesia, lithia, monoaluminium phosphate or cerium acetate.

US Patent 5,728,466 (Sekhar/de Nora) discloses a carbon cathode for the electrowinning of aluminium, to which a hard surface is provided by adding to the surface of the carbon cathode a layer containing particulate refractory hard metal boride and a colloidal binder which when the carbon cathode is heated reacts with the refractory hard metal boride and carbon from the cathode or from a carbon-containing atmosphere.

### Objects of the Invention

An object of the invention is to provide a component made of or coated with a refractory material which is resistant to aggressive environments and can be used in aluminium electrowinning cells, in steel arc furnaces and apparatus for treating molten metal and other high temperature applications.

A major object of the invention is to provide coatings of refractory hard material to protect components of carbon or other materials, in particular carbon components of cells for the electrowinning of aluminium or aluminium purification apparatus, which coatings have a high density and an improved mechanical resistance, in particular against delamination.

A preferred object of the invention is to provide a component coated with refractory material which can be used in corrosive environments, such as oxidising media or gaseous or liquid corrosive agents at elevated temperature, having an improved resistance against oxidation, corrosion and erosion and which has an improved electrical conductivity, electrochemically active and/or physico-chemical properties.

A further object of the invention is to provide aluminium electrowinning cell components with a coating protecting against oxidation, corrosion and erosion, in particular coated cathodes or drained cathodes with enhanced electrical conductivity, electrochemical activity and physico-chemical properties (aluminium-wettability).

Another object of the invention is to provide electrodes, in particular for arc furnaces for the production of steel, coated on their inactive surfaces with a coating protecting against premature oxidation.

Yet another object of the invention is to provide components for the treatment of molten metals protected with a coating wettable by the molten metal and protecting against oxidation and erosion of the component.

An object of the invention is to provide a component covered with a coating protecting the component against wear and controlling the component's lifetime, the coating's thickness and/or composition being readily adjustable for different parts of the component that may in use be exposed to different to wear conditions.

### Summary of the Invention

The invention relates to a component which during use is exposed to molten aluminium. The component comprises a body, typically made of carbon or carbon-containing material, coated with an adherent multi-layer protective coating which during operation is exposed to molten aluminium. The protective coating has an outer layer which is wettable by molten aluminium by penetration thereof into the outer layer, and an aluminium-repellent layer underneath forming a barrier to molten aluminium on the body which prevents exposure of the body to molten aluminium.

Usually, the aluminium-wettable outer layer contains a wetting agent, e.g. as disclosed below, that draws molten aluminium into the coating. Conversely, the aluminium-repellent layer is preferably free of any wetting agent. At least one of the aluminium-wettable outer layer and the aluminium-repellent layer may comprise a refractory material as described below.

To enhance wetting of the aluminium-wettable outer layer by molten aluminium, the outer layer can be covered before use with a start-up layer applied from a slurry made of particulate wetting oxide in a polymeric and/or colloidal binder, as disclosed below.

It has been observed that particles of refractory metal compounds, e.g. borides such as TiB₂, silicides, nitrides, carbides and phosphides, are surface oxidised when exposed to air or another oxidising media which produces an oxide film of the metal of the refractory metal compound. Particular aspects of the present invention are based on the insight that the existence of the oxide film on particles of refractory metal compounds can be used to modify and improve known coatings, e.g. those described in the abovementioned US Patent 5,651,874.

A particular embodiment of the invention concerns the improvement of the cohesion of the refractory metal compound particles within the refractory material, the density of the refractory material and its mechanical and chemical resistance. These improvements are achieved by suspending a particulate metal oxide in the colloidal and/or polymeric slurry in addition to the suspended particulate refractory metal compound. Upon heating, the suspended particulate metal oxide reacts with the polymeric and/or colloidal metal oxide to form a mixed oxide that is at least partly miscible with the mixed oxide produced from the reaction between the polymeric and/or colloidal bonding metal oxide and the oxide surface of the refractory metal compound particles.

Upon reaction, the refractory metal compound particles are not merely bonded together by mixed oxide joints between them but are bonded within a coherent mixed oxide matrix formed by the mixed oxides of the colloidal and/or polymeric oxide reacted on the one hand with the suspended particulate metal oxide and on the other hand with the surface oxide of the refractory metal compound.

The high cohesion of the constituents of this refractory material reduces the risk of cracks and increases the impermeability of the refractory material to infiltration of aggressive constituents from the environment during use.

In this embodiment of the invention, the component can be made of or coated with a refractory material for use at high temperature. The refractory material comprises particles of a refractory metal compound in an oxide matrix. The refractory metal compound is selected from metal borides, silicides, nitrides, carbides and phosphides. The oxide matrix comprises a bonding mixed oxide made of a single mixed oxide or a plurality of miscible mixed oxides.

The refractory material is obtainable from a heat treated slurry that comprises:
a) a colloidal and/or polymeric carrier that comprises colloidal and/or polymeric oxide of at least one metal;
b) suspended particles of the refractory metal compound that are covered with an integral film of oxide of the metal of the refractory metal compound, the oxide film being reactable upon heat treatment with said colloidal and/or polymeric oxide to form a mixed oxide comprised in said bonding mixed oxide; and
c) suspended metal oxide particles which are reactable upon heat treatment with said colloidal and/or polymeric oxide to form a mixed oxide comprised in said bonding mixed oxide.

The bonding mixed oxide, including the mixed oxide formed from the reaction of the oxide film and the colloidal and/or polymeric oxide, is a single mixed oxide when the metal of the suspended metal oxide particles is the same as the metal of the suspended refractory metal compound particles and the reactable oxide of the colloidal and/or polymeric oxide is an oxide of one metal only, e.g. a slurry consisting of suspended particles of surface oxidised titanium diboride and of titanium oxide in colloidal alumina that produces a bonding mixed oxide consisting of titanium-aluminium mixed oxide.

The bonding mixed oxide, including the mixed oxide formed from the reaction of the oxide film and the colloidal and/or polymeric oxide, consists of a plurality of miscible mixed oxides when at least one metal of the suspended metal oxide particles is different to the metal of the suspended refractory metal compound particles and/or when the colloidal and/or polymeric oxide comprises reactable oxides of different metals, e.g. a slurry consisting of suspended particles of surface oxidised titanium diboride and of magnesium oxide in colloidal alumina that produces a bonding mixed oxide consisting of miscible titanium-aluminium mixed oxide and magnesium-aluminium mixed oxide.

When the metals of the suspended metal oxide and the refractory metal compound are different, it is advantageous to use constituents of the slurry that produce mixed oxides having a great miscibility. The greater the miscibility of the mixed oxides the greater is the ratio of the bonding mixed oxide in the oxide matrix which increases the matrix's stability and density.

The bonding mixed oxide may comprise a mixed oxide of the metal(s) of said colloidal and/or polymeric oxide and at least one metal selected from titanium, silicon, chromium, vanadium, zirconium, hafnium, niobium, tantalum, molybdenum and cerium which is derived from the oxide film of said refractory metal compound suspended particles and/or said suspended metal oxide particles.

The colloidal and/or polymeric oxide may be selected from colloidal and/or polymeric alumina, ceria, lithia, magnesia, silica, thoria, yttria, zirconia, tin oxide and zinc oxide, and mixtures thereof.

For instance, the refractory material comprises titanium diboride as the refractory metal compound and a titanium-aluminium mixed oxide-containing bonding mixed oxide. This refractory material can be obtained from a slurry of colloidal alumina containing suspended particles of surface oxidised titanium diboride and of titanium oxide or another metal oxide, e.g. silica or magnesia, that forms a mixed oxide with alumina which is miscible with titanium-aluminium mixed oxide.

Usually, the bonding mixed oxide constitutes at least 10 weight%, typically at least 30 weight% and preferably at least 50 weight%, of the oxide matrix. The oxide matrix may further comprise non-reacted particles of the colloidal and/or polymeric oxide and/or non-reacted particles of the suspended metal oxide.

As stated above, the bonding mixed oxide may consist of a single mixed oxide or a plurality of miscible mixed oxides. When the bonding mixed oxide consists of miscible mixed oxides it can be saturated with a miscible mixed oxide. Thus, in addition to the bonding mixed oxide, the oxide matrix may comprises in a separate phase the mixed oxide which is in excess to saturation. This may happen when the mixed oxides forming the bonding mixed oxide are only partly miscible.

The component may be a body that is coated with the refractory-material coating, the coating comprising at least two different grades of refractory compounds in one or several layers. For example, the coating comprises a plurality of layers, each layer containing only one grade of refractory metal compound.

To produce thick coatings or self-sustaining bodies, it is preferred that the refractory material is produced from a colloidal and/or polymeric carrier that contains different grades of colloidal and/or polymeric particles, as taught in EP 0 932 589 (Sekhar/Duruz/Liu). Combinations of different grades of colloidal and/or polymeric carrier improve the packing of the coating particles and reduce the risk of cracks when the coating is dried and/or heat treated.

When the component is used for applications in which it comes into contact with molten aluminium or another metal, the bonding mixed oxide and the refractory metal compound are preferably substantially inert to and insoluble in the molten metal.

The constituents of the slurry producing the refractory material can be such that the refractory material is resistant to attack by molten fluoride-containing electrolyte and/or oxidising gas.

As mentioned above, for certain applications in which the component contacts molten metal, the oxide matrix further comprises a wetting agent consisting of a metal oxide that is reactable with the molten metal to form an oxide by transfer of the oxygen from the wetting agent to the molten metal and an alloy of the molten metal and the metal of the wetting agent.

For instance, when the refractory material comprises an aluminium-wetting agent and is exposed to molten aluminium, the molten aluminium reacts with the aluminium-wetting agent to form alumina and an alloy of aluminium and the metal of the wetting agent permitting infiltration of aluminium in the refractory material without dissolution of the bonding oxide or the refractory metal compound. The molten aluminium infiltration makes the refractory material aluminium-wettable without dissolving it. The aluminium-wetting agent is typically selected from oxides of manganese, iron, cobalt, nickel, copper, zinc, molybdenum, the Lanthanides and rare earth metals.

In one embodiment, the component comprises a carbon body coated with the aluminium-wettable refractory material containing the aluminium-wetting agent. The aluminium-wettable refractory material is bonded to the carbon body through an anchorage layer which is free from constituents that are miscible or able to react with molten aluminium. The density of the anchorage layer and its inertness to molten aluminium is such that the anchorage layer forms a barrier to molten aluminium, i.e. no molten aluminium can infiltrate the anchorage layer and penetrate into the carbon body to cause damage, as demonstrated in Example 4.

Advantageously, the composition of the aluminium-wettable refractory material is the same as the composition of the anchorage layer plus the wetting agent. Because of the composition compatibility, the anchorage layer and the aluminium-wettable refractory material are intimately bonded upon heat treatment by a continuous oxide matrix extending therethrough.

The aluminium-wettable refractory material may be covered with a start-up layer applied from a slurry made of an aluminium-wetting agent in a polymeric and/or colloidal binder. As opposed to the aluminium-wettable refractory material, this start-up layer constitutes upon heat treatment a temporary layer, the temporary layer protecting the aluminium-wettable refractory material, in particular against oxidising gas and/or molten electrolyte attack during start-up in an aluminium electrowinning cell. The start-up layer also promotes wetting of the aluminium-wettable refractory material by molten aluminium. During use and upon wetting, the start-up layer may be washed away.

As mentioned above, the thickness of layers applied from colloidal and/or polymeric slurries can be increased by combining different grades of colloids and/or polymers. For example, when the anchorage layer is a current carrying layer and of a composition that is free of constituents enhancing the conductivity, it is preferable to limit its thickness by applying it from a slurry that contains a single grade colloid or polymer. For aluminium production cathodes, the thickness of the anchorage layer is typically of the order of 100 to 150 micron or below.

Conversely, a layer of the aluminium-wettable refractory material is rendered well conductive by being infiltrated during use with molten aluminium that reacts with the aluminium-wetting agent to form alumina and a well conductive alloy of aluminium and the metal of the wetting agent. Therefore, the thickness of such a refractory material layer can be increased to increase the layer's lifetime without adverse effect on its electrical conductivity. For this purpose, the aluminium-wettable refractory material may be produced from a slurry that comprises a multi-grade colloidal and/or polymeric carrier. For aluminium production cathodes, the thickness of the layer of aluminium-wettable material is typically of the order of 1 to 3 mm.

The overall electrical resistance of this composite coating, i.e. anchorage layer plus aluminium-wettable refractory material, is much lower, typically from about 100 to 1000 times lower, than that of prior art slurry-applied coatings of equivalent thickness, e.g. as disclosed in EP 0 932 589, which are made of materials whose electrical resistivity is of the order of the resistivity of the anchorage layer. At room temperature, the overall electrical resistivity of the composite coating according to the invention is typically of the order of 1 Ω, whereas prior art coatings of equivalent thickness have an overall resistivity of the order of 500 Ω.

Usually, the useful lifetime of the start-up layer is short, typically less than 24 hours after start-up. After a few hours the aluminium-wettable refractory material is completely wetted by molten aluminium rendering the start-up layer superfluous. Therefore, the start-up layer's thickness can be quite small, e.g. comparable to the thickness of the anchorage layer, and produced from a slurry containing a single grade colloid or polymer.

### Applications of Components of the Invention

The invention also relates to an apparatus for operation at high temperature which comprises at least one component as described above that is exposed during operation of the apparatus to high temperature conditions.

As stated above, the component of the invention is particularly suited for use in an electrolytic cell for cathodically producing aluminium from alumina dissolved in a fluoride-containing molten electrolyte. The component of the invention may be used as a cathode, in particular a drained cathode, part of the cell bottom or a cell sidewall.

A further application of the above described component relates to steel arc furnaces for treating steel to produce iron, in particular as a holder for arc electrodes or as a carbon arc electrode having at least one inactive surface coated with the protective coating and wetted by molten aluminium.

Furthermore, the component may be used in an apparatus for treating molten. During use, the component is exposed to the molten aluminium and/or an oxidising media.

This apparatus can be used for separating molten aluminium from impurities and/or separating constituents of an aluminium-containing alloy by centrifugal and/or gravitational force.

The apparatus optionally comprises means for imparting a rotary motion to the molten aluminium usually about a substantially vertical axis and is so arranged that during use at least part of a wear-exposed surface of the refractory material of the component is temporarily or permanently in contact with molten aluminium.

The contacting molten aluminium can be static or in motion relative to the component's wear-exposed surface. The component of the invention may be a vessel containing the molten aluminium, a stirrer for imparting a movement to the aluminium, a stator that in use dips in the molten aluminium and is arranged to deliver treating fluid into the molten aluminium, a rotatable stirrer arranged to dip in and rotate the molten aluminium during operation, or another type of disperser or a part thereof.

The component may consist of a coated carbon-based or carbide-based material, in particular petroleum coke, metallurgical coke, anthracite, graphite, amorphous carbon or mixtures thereof. Alternatively, the coated part of the coated component consists of metal-based material.

Whereas the coating of invention has been described with particular reference to components of aluminium electrowinning cells, arc electrodes and aluminium treatment systems, the invention is useful inter-alia for protecting the various engineering components made of carbon or other materials listed at the outset.

Such components may have a carbonaceous substrate, or a substrate of a metal, alloy, intermetallic compound, ceramic or refractory material, to which the protective coating is applied.

Further aspects and details of the invention will become apparent in the Detailed Description and in the appended Claims.

### Brief Description of the Drawings

Embodiments of the invention will now be described by way of example with reference to the accompanying schematic drawings, wherein:
- Figure 1 shows a schematic cross-sectional view of an aluminium production cell with carbonaceous drained cathodes having a coating in accordance with the invention;
- Figure 2 schematically shows an arc electrode furnace incorporating coatings according to the invention;
- Figure 3 shows an apparatus for the purification of a molten aluminium having a carbonaceous stirrer protected with a coating according to the invention;
- Figure 3a is an enlarged schematic sectional view of part of the stirrer shown in Figure 3; and
- Figure 4 schematically shows a variation of the stirrer shown in Figure 3.

### Detailed Description

### Aluminium Electrowinning Cell:

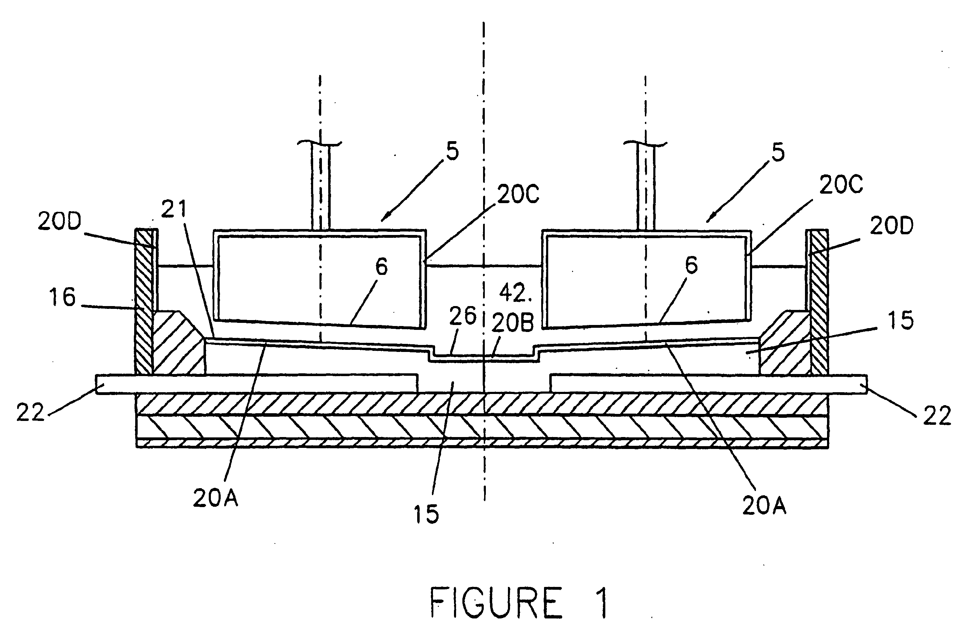

Figure 1 shows an aluminium electrowinning cell comprising a series of carbonaceous anode blocks 5 according to the invention having operative surfaces 6 suspended over a drained sloping flattened generally V-shaped cathode surface 21 according to the invention in a fluoride-containing molten electrolyte 42 containing dissolved alumina.

The drained cathode surface 21 is formed by the surface of an aluminium-wettable coating 20A applied to the upper surfaces of a series of juxtaposed carbon cathode blocks 15 extending in pairs arranged end-to-end across the cell. The protective aluminium-wettable coating 20A has an aluminium-repellent layer covered with an aluminium-wettable layer and is deposited from colloidal and/or polymeric slurries according the invention, for instance as embodied in Examples 1, 1a, 2 or 2a but preferably as disclosed in Example 4.

The cathode blocks 15 comprise, embedded in recesses located in their bottom surfaces, current supply bars 22 of steel or other conductive material for connection to an external electric current supply.

The drained cathode surface 21 is divided by a central aluminium collection groove 26 located between pairs of cathode blocks 15 arranged end-to-end across the cell. The aluminium collection groove 26 is situated at the bottom of the drained cathode surface 21 and is arranged to collect the product aluminium draining from the cathode surface 21. The aluminium collection groove 26 is coated with a protective coating 20B similar to coating 20A.

The anode blocks 5 too are coated with a refractory coating 20C on their inactive surfaces as shown in Figure 1 or only on their top surface and shoulders, i.e. only the top surfaces and the upper part of the lateral surfaces. The anodes are not coated on the operative anode surfaces 6 which are immersed as such in the molten electrolyte 42. This coating 20C has an aluminium-wettable layer on an aluminium-repellent layer. To further improve the coating's protection against oxidation, it is advantageous to add oxide-free or partly oxidised metal particles, e.g. oxide(s) of iron, copper and/or nickel, to the slurry, e.g. as disclosed in Examples 1 and 2a. Further to improve the coating's resistance it is made aluminium-wettable and wetted with aluminium before use.

The cell comprises carbonaceous sidewalls 16 according to the invention exposed to molten electrolyte and to the environment above the molten electrolyte, but protected against the molten electrolyte 42 and the environment above the molten electrolyte with a coating 20D. The coating 20D may be of the same composition as the anode coating 20C and is wetted by molten aluminium.

The method of application of the coatings 20A,20B,20C,20D comprises applying to the surface of the component layers of colloidal and/or polymeric slurries as specified above, followed by drying. The cathode coating 20A and the collection groove coating 20B can be heat treated before or after installation in the aluminium production cell, and when the coating contains oxidised metal particles, e.g. oxides of nickel, iron or copper, the reaction of these particles with molten aluminium can be done before or during use. The anode coating 20C and the sidewall coating 20D should be heat treated and reacted with molten aluminium before use in the cell since these components do not contact molten aluminium during use.

The method of coating the components 5,15,16 of the present invention by application of the slurry involves painting (by brush or roller), dipping, spraying, or pouring the slurry onto the components 5,15,16 and allowing to dry before another layer is added. The coating 20A,20B,20C,20D does not need to be entirely dry before the application of the next layer. It is preferred to heat at least the final coating 20A,20B,20C,20D with a suitable heat source so as to completely dry it and improve densification. Heating and drying take place preferably at about 80-200°C, usually for half an hour to several hours, and further heat treatments are possible.

The surfaces of the carbon components 5,15,16 to be coated with this slurry may be treated by sand blasting or pickled with acids or fluxes such as cryolite or other combinations of fluorides and chlorides prior to the application of the coating 20A,20B,20C,20D. Similarly the surfaces may be cleaned with an organic solvent such as acetone to remove oily products and other debris prior to coating. These treatments will enhance the bonding of the coatings to the component.

Before or after application of the coating 20A,20B,20C,20D and before use, the surfaces of the components 5,15,16 can be painted, sprayed, dipped or infiltrated with reagents and precursors, gels and/or colloids.

In operation of the cell illustrated in Figure 1, alumina dissolved in the molten electrolyte 42 at a temperature of 750° to 960°C is electrolysed between the anodes 5 and the cathode blocks 15 to produce gas on the operative anodes surfaces 6 and molten aluminium on the aluminium-wettable drained cathode coating 20A.

The cathodically-produced molten aluminium flows down the inclined drained cathode surface 21 into the aluminium collection grooves 26 onto the aluminium-wettable coating 20B from where it flows into an aluminium collection reservoir for subsequent tapping.

Figure 1 shows a specific aluminium electrowinning cell by way of example. It is evident that many alternatives, modifications and variations will be apparent to those skilled in the art. For instance, the cell may have one or more aluminium collection reservoirs across the cell, each intersecting the aluminium collection groove to divide the drained cathode surface into four quadrants as described in WO00/63463 (de Nora). The anodes may be made of inert materials and have an electrochemically active structure of grid-like design to permit electrolyte circulation, as for example disclosed in WO01/31086 (de Nora/Duruz).

### Arc Furnace:

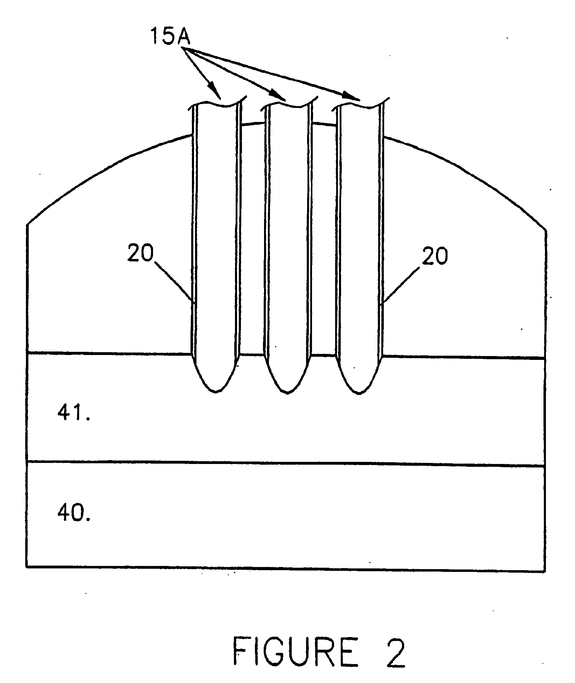

The arc furnace shown in Figure 2 comprises three consumable electrodes 15A arranged in a triangular relationship. For clarity, the distance between the electrodes 15A as shown in Figure 2 has been proportionally increased with respect to the furnace. Typically, the electrodes 15A have a diameter between 200 and 500 mm and can be spaced by a distance corresponding to about their diameter.

The electrodes 15A are connected to an electrical power supply (not shown) and suspended from an electrode positioning system above the cell which is arranged to adjust their height.

The consumable electrodes 15A are made of a carbon substrate laterally coated with a coating 20 containing an aluminium-repellent layer and an outer aluminium-wettable layer protecting the carbon substrate from oxidising gas in accordance with the invention. The aluminium-wettable layer of the coating contains metal oxide particles which are reactable with molten aluminium, e.g. as disclosed in Examples 2 and 2a. The coating is exposed before use to molten aluminium so that the reactable particles react with aluminium.

The method of application of the coating 20 is similar to the method described in relation to the cathode blocks 15 described above.

The bottom of electrodes 15A which is consumed during operation and constitutes the electrodes' operative surface is uncoated. The coating 20 protects only the electrodes' lateral faces against premature oxidation.

The electrodes 15A dip in an iron source 41, usually containing iron oxide or oxidised iron, such as scrap iron, scrap steel and pig iron. Preferably, the iron source 41 further comprises reductants selected from gaseous hydrogen, gaseous carbon monoxide or solid carbon bearing reductants. The reductants may also comprise non-iron minerals known as gangue which include silica, alumina, magnesia and lime.

The iron source 41 floats on a pool of liquid iron or steel 40 resulting from the recycling of the iron source 41.

During use, a three phase AC current is passed through electrodes 15A, which directly reduces iron from the iron source 41. The reduced iron is then collected in the iron or steel pool 40. The gangue contained in the reduced iron is separated from the iron by melting and flotation forming a slag (not shown) which is removed, for example through one or more apertures (not shown) located on sidewalls of the arc furnace at the level of the slag.

The pool of iron or steel 40 is periodically or continuously tapped for instance through an aperture (not shown) located in the bottom of the arc furnace.

### Molten Aluminium Purification Apparatus:

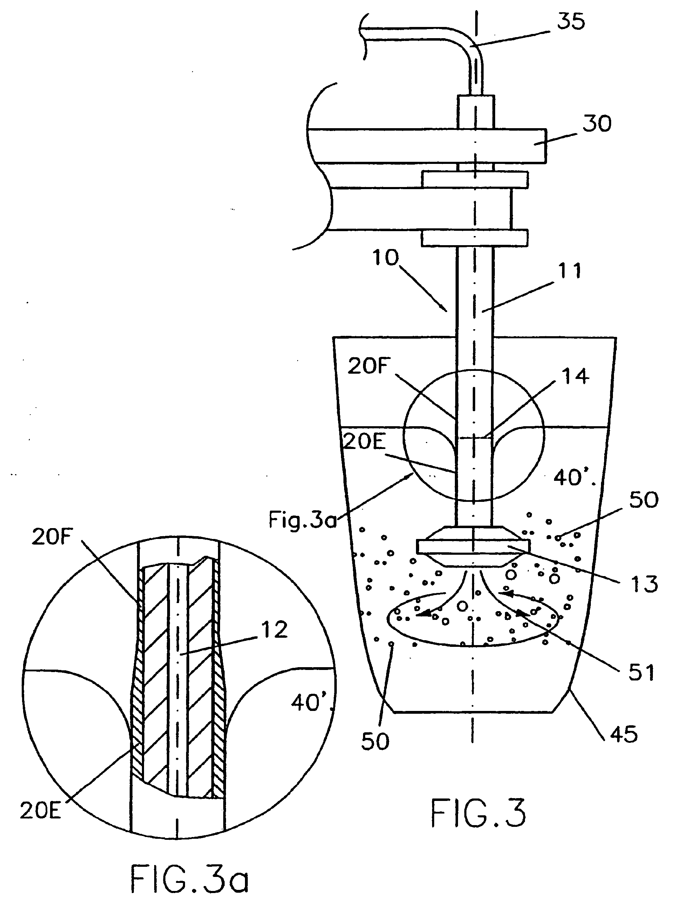

The molten aluminium purification apparatus partly shown in Figure 3 comprises a vessel 45 containing molten aluminium 40' to be purified. A rotatable stirrer 10 made of carbon-based material, such as graphite, is partly immersed in the molten aluminium 40' and is arranged to rotate therein.

The stirrer 10 comprises a shaft 11 whose upper part is engaged with a rotary drive and support structure 30 which holds and rotates the stirrer 10. The lower part of shaft 11 is carbon-based and dips in the molten aluminium 40' contained in vessel 45. At the lower end of the shaft 11 is a rotor 13 provided with flanges or other protuberances for stirring the molten aluminium 40'.

Inside the shaft 11, along its length, is an axial duct 12, as shown in Figure 3a, which is connected at the stirrer's upper end through a flexible tube 35 to a gas supply (not shown), for instance a gas reservoir provided with a gas gate leading to the flexible tube 35.

The axial duct 12 is arranged to supply a fluid to the rotor 13. The rotor 13 comprises a plurality of apertures connected to the internal duct 12 for injecting the gas into the molten aluminium 40', as shown by arrows 51.

The lower part of the shaft 11, i.e. the immersed part and the interface region at or about the meltline 14 of the shaft, as well as the rotor 13 are coated with a coating 20E comprising an aluminium-repellent layer and an aluminium-wettable outer layer according to the invention. This coating improves the resistance to erosion, oxidation and/or corrosion of the stirrer during operation.

As shown in Figure 3, the upper part of shaft 11 is also protected with a coating 20F, against oxidation and/or corrosion. The upper part of the carbon-based shaft 11 is coated with a thin coating of refractory material 20F providing protection against oxidation and corrosion, whereas the coating 20E protecting the immersed part of the shaft 11 and the rotor 13 is a thicker coating of refractory material providing protection against erosion, oxidation and corrosion. Such a coating gradation is appropriate for batch processes during which the stirrer is alternatively exposed to molten aluminium and the atmosphere. For continuous purification processes, the coating may be of uniform thickness.

Likewise, surfaces of the vessel 45 which come into contact with the molten aluminium is protected with an aluminium-wettable coating according to the invention, as described in relation to the anodes, cell sidewalls or arc furnace electrodes. The coating is thereby further protected against oxidation by a surface film of aluminium.

The method of application of the coating 20E,20F is similar to the method described in relation to the cathode blocks 15 described above.

During operation of the apparatus shown in Figure 3, a reactive or non-reactive fluid, in particular a gas 50 alone or a flux, such as a halide, nitrogen and/or argon, is injected into the molten aluminium 40' contained in the vessel 45 through the flexible tube 35 and stirrer 10 which dips in the molten aluminium 40'.

The stirrer 10 is rotated at a speed of about 100 to 500 RPM so that the injected gas 50 is dispersed throughout the molten aluminium in finely divided gas bubbles. The dispersed gas bubbles 50, with or without reaction, remove impurities present in the molten aluminium 40' towards its surface, from where the impurities may be separated thus purifying the molten aluminium.

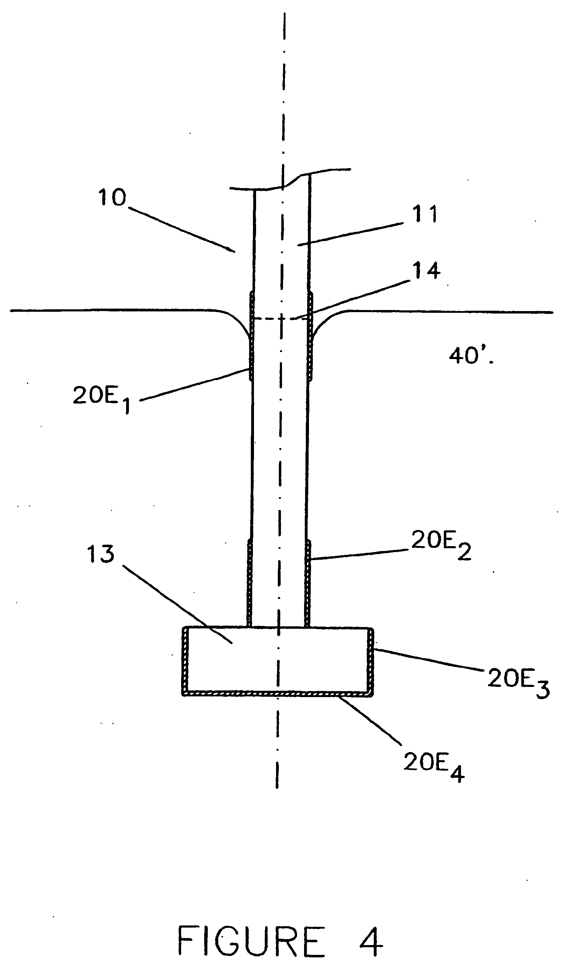

The stirrer 10 schematically shown in Figure 4 dips in a molten aluminium bath 40' and comprises a shaft 11 and a rotor 13. The stirrer 10 may be of any type, for example similar to the stirrer shown in Figure 3 or of conventional design as known from the prior art. The rotor 13 of stirrer 10 may be a high-shear rotor or a pump action rotor.

In Figure 4, instead of coating the entire shaft 11 and rotor 13, parts of the stirrer 10 liable to erosion are selectively coated with a coating according to the invention.

The interface portion at and about the meltline 14 of the carbon-based lower part of the shaft 11 is coated with a refractory interface coating 20E₁, for instance over a length of up to half that of the shaft 11. Excellent results have been obtained with a coating over a third of shaft 11. However, the length of coating 20E₁ could be a quarter of the length of shaft 11 or even less, depending on the design of stirrer 10 and the operating conditions.

In addition to the interface portion of such stirrers, other areas may be liable to erode, again depending on the design and operating conditions of the stirrers. The schematically shown stirrer 10 in Figure 4 illustrates further coated surfaces which are particularly exposed to erosion. The lower end of the shaft 11 adjacent to the rotor 13 is protected with a coating 20E₂, the lateral surface of rotor 13 is protected with a coating 20E₃ and the bottom surface of the rotor 13 is coated with a coating 20E₄.

For each specific stirrer design, the coating or different coatings on different parts of the stirrer, such as coatings 20E₁, 20E₂, 20E₃ and 20E₄ shown in Figure 4, may be adapted as a function of the expected lifetime of the stirrer. For optimal use, the amount and location of such coatings can be so balanced that they each have approximately the same lifetime.

In an alternative embodiment (not shown), the coating on such stirrers may be continuous as illustrated in Figure 3 but with a graded thickness or composition so as to adapt the resistance against erosion to the intensity of wear of each part of the stirrer, thereby combining the advantages of the different coatings shown in Figure 4.

Various modifications can be made to the apparatus shown in Figures 3, 3a and 4. For instance, the shaft shown in Figure 3 may be modified so as to consist of an assembly whose non-immersed part is made of a material other than carbon-based, such as a metal and/or a ceramic, which is resistant to oxidation and corrosion and which, therefore, does not need any coating, whereas the immersed part of the shaft is made of carbon-based material protected with a coating according to the invention. Such a composite shaft would preferably be designed to permit disassembly of the immersed and non-immersed parts so the immersed part can be replaced when worn.

Likewise, a carbon-based non-immersed part of the shaft may be protected from oxidation and corrosion with a coating and/or impregnation of a phosphate of aluminium, in particular applied in the form of a compound selected from monoaluminium phosphate, aluminium phosphate, aluminium polyphosphate, aluminium metaphosphate, and mixtures thereof. Suitable coating and/or impregnation compositions are disclosed in US Patent 5,534,119 (Sekhar). It is also possible to protect the non-immersed part of the shaft with a coating and/or impregnation of a boron compound, such as a compound selected from boron oxide, boric acid and tetraboric acid. Suitable coating and/or impregnation compositions are disclosed in US Patent 5,486,278 (Manganiello/Duruz/Bellò) and in co-pending application WO97/26626 (de Nora/Duruz/Berclaz).

In a modification, the coating of the invention may simply be applied to any part of the stirrer in contact with the molten aluminium, to be protected against erosion, oxidation and/or corrosion during operation.

The invention will be further described in the following examples.

### Example 1

A slurry for producing an aluminium-repellent layer of a component according to the invention was prepared by suspending a refractory hard metal compound consisting of 47.5 g surface-oxidised particulate spherical TiB₂ (-325 mesh) having a TiO₂ surface film and a metal oxide in the form of 2.5 g TiO₂ (-325 mesh) in a colloidal carrier consisting of 20 ml colloidal Al₂O₃ (NYACOL® Al-20, a milky liquid with a colloidal particle size of about 40 to 60 nanometer) and 1 ml PEG (polyethylene glycol) which increases the viscosity of the slurry and enhances its capacity to be applied by painting as well as the adherence and coherence of the final coating.

This slurry produces upon heat treatment an oxide matrix of titanium-aluminium mixed oxide from the reaction of the colloidal oxide Al₂O₃ and TiO₂ present as suspended oxide particles and oxide film covering the suspended TiB₂ particles. The oxide matrix contains and bonds TiB₂ particles.

### Example 1a

The constituents of the slurry of Example 1 may be changed as shown in the following Table in which each line represents possible combinations of constituents:

| Colloidal or Polymeric Oxides | Suspended Metal Oxides | Suspended Surface-Oxidised Refractory Metal Compounds |
|---|---|---|
| Al₂O₃ | TiO₂, MgO or SiO₂ | TiB₂, SiC, TiC or TiN |
| TiO₂ | Al₂O₃ or MgO | SiC or SiN |
| SiO₂ | Al₂O₃ or MgO | TiB₂, TiC or TiN |

### Example 2

Another slurry for producing an aluminium-wettable layer of a component according to the invention was prepared by suspending a refractory hard metal compound consisting of 92.5 g particulate needle-shaped surface-oxidised TiB₂ (-325 mesh) having a TiO₂ surface oxide film, an aluminium-wetting agent in the form of 2.5 g particulate Fe₂O₃ (-325 mesh) and a metal oxide in the form of 2.5 g TiO₂ (-325 mesh) in a colloid consisting of a combination of two grades of colloidal Al₂O₃, namely 28 ml of a first grade of colloidal Al₂O₃ (NYACOL® Al-20, a milky liquid with a colloidal particle size of about 40 to 60 nanometer) and 24 ml of a second grade of colloidal Al₂O₃ (CONDEA® 10/2 Sol, a clear, opalescent liquid with a colloidal particle size of about 10 to 30 nanometer).

This slurry produces upon heat treatment a matrix of mixed oxides containing titanium-aluminium mixed oxide and a small amount of iron-titanium-aluminium mixed oxide from the reaction of TiO₂, Fe₂O₃ and Al₂O₃. This matrix contains and bonds the TiB₂ and Fe₂O₃ particles

### Example 2a

Example 2's slurry composition consists of an aluminium-wetting agent (Fe₂O₃) and a reaction mixture made of the colloid (Al₂O₃), the suspended refractory metal compound (TiB₂) the suspended metal oxide (TiO₂). This Example can be modified by completely or partly substituting the aluminium-wetting agent with copper oxide and/or nickel oxide, and/or by varying the composition of the reaction mixture as in Example 1a.

### Example 3

A further slurry for producing a temporary aluminium-wettable start-up layer that can be used in combination with a component according to the invention, e.g. as disclosed in Example 4, was prepared as follows. An amount of 60 g of surface oxidised copper particles (-325 mesh) was suspended in a carrier consisting of 13 ml of colloidal Al₂O₃ (7 ml NYACOL® Al-20, a milky liquid with a colloidal particle size of about 40 to 60 nanometer and 6 ml CONDEA® 10/2 Sol, a clear, opalescent liquid with a colloidal particle size of about 10 to 30 nanometer) and 1 ml of PEG (polyethylene glycol) which increases the viscosity of the slurry and enhances its capacity to be applied by painting as well as the adherence and coherence of the final coating.

Upon heat treatment the slurry produces an alumina matrix containing and bonding the oxidised copper particles.

As a modification, oxidised particles of nickel and/or iron may be used to substitute in part or completely the oxidised copper particles in colloidal alumina (CONDEA 25/5 with a pH > 7).

### Example 4

Three carbon cathodes for use in a drained cell for the production of aluminium were each coated with the slurries of Examples 1, 2 and 3 as follows:

First, an aluminium-repellent anchorage layer having a thickness of about 100 micron was painted onto the exposed surface of the carbon cathode from the slurry of Example 1. The anchorage layer was allowed to dry for 30 minutes.

The anchorage layer was covered with an aluminium-wettable layer obtained by painting 8 layers of the slurry of Example 2. Each applied layer was allowed to dry for 30 minutes before application of the next layer. The final aluminium-wettable layer had a thickness of about 1.8 mm.

The aluminium-wettable layer was then covered with a temporary start-up layer obtained by painting 1 layer of the slurry of Example 3. The start-up layer had a thickness of about 100 to 150 micron.

The coating formed by the anchorage layer, the aluminium-wettable layer and the start-up layer on the carbon cathode was allowed to dry for 24 hours.

Two of the three cathodes were then covered with an aluminium sheet having a thickness of about 1.5 cm and heated in an oven at a temperature of about 850-900°C in air.

The first cathode was extracted from the oven after 30 minutes and allowed to cool down to ambient temperature. Examination of a cross-section of the coating showed that aluminium had infiltrated the start-up layer so that the coating was superficially wetted by molten aluminium. No reaction between aluminium and iron oxide had yet taken place.

The second cathode was extracted from the oven after 24 hours and allowed to cool down to ambient temperature. Examination of a cross-section of the coating showed that aluminium had infiltrated the start-up layer and the aluminium-wettable layer. Part of the aluminium had reacted with the Fe₂O₃ wetting agent to form Al₂O₃ and Fe metal. Aluminium infiltration had been stopped on the aluminium-repellent anchorage layer for lack of aluminium-wetting agent which demonstrated that the aluminium-repellent anchorage layer is an effective barrier layer against penetration of aluminium into the carbon cathode.

The aluminium metal infiltration into the start-up layer and the aluminium-wettable layer enhanced the conductivity of the coating. At ambient temperature, the perpendicular electrical resistance through the coating was less than 1 ohm after infiltration versus more than 500 ohm before infiltration.

The coatings on both cathodes showed a continuous matrix of titanium-aluminium mixed oxides between the anchorage layer and the aluminium-wettable layer which guarantees an excellent adherence between the two layers. In both cases the particles of TiB₂ had not been oxidised by the heat treatment and wettability of the coating by aluminium was very good. The angle of wettability was less than 10 deg.

The third coated carbon cathode was used in an aluminium production drained cell as follows:

The cathode covered with the dried coating according to the invention was covered in the cell with a 1.5 cm thick sheet of aluminium. The cell was heated to a temperature of about 850-900°C by passing an electrical current between the cathode and facing anodes through carbon powder. Other start-up heating procedures could also have been used, e.g. using gas burners to generate heat.

After 30 minutes at 850-900°C, the start-up coating was superficially wetted by molten aluminium which constitutes a barrier against damaging fluoride-based molten electrolyte constituents, such as sodium compounds, and a cryolite based electrolyte was filled into the cell.

The cell was further heated to 960°C at which temperature the cell was operated under an electrolysis current density of 0.8 A/cm² to produce aluminium under conventional steady state conditions.

As a modification, the cathode can be used in a cell operating with a pool of aluminium. In this case, high wettablility by aluminium is not critical. However, even for operation with an aluminium pool, the coating preferably comprises an aluminium-wettable layer on the anchorage layer for improved protection. Furthermore, to achieve maximum protection of the carbon cathode, the coating comprises in addition a start-up top layer.

## Claims

1. A component which during use is exposed to molten aluminium, comprising a body coated with an adherent multi-layer protective coating which during operation is exposed to molten aluminium the protective coating having an outer layer which is wettable by molten aluminium by penetration thereof into the outer layer, and an aluminium-repellent layer underneath forming a barrier to molten aluminium on the body which prevents exposure of the body to molten aluminium.

2. The component of claim 1, wherein the body is made of carbon or carbon-containing material.

3. The component of claim 1 or 2, wherein the aluminium-wettable outer layer contains a wetting agent that draws molten aluminium into the coating, in particular a wetting agent selected from oxides of manganese, iron, cobalt, nickel, copper, zinc, molybdenum, the Lanthanides and rare earth metals.

4. The component of any one of claims 1 to 3, wherein the aluminium-repellent layer is free of any wetting agent, the composition of the aluminium-wettable outer layer having in particular the composition of the aluminium-repellent layer plus the aluminium-wetting agent.

5. The component of any preceding claim, wherein the aluminium-wettable outer layer is covered with a start-up layer applied from a slurry made of particulate wetting oxide in a polymeric and/or colloidal binder, the start-up layer constituting upon heat treatment a temporary layer protecting the aluminium-wettable outer layer and promoting wetting of the aluminium-wettable refractory material by molten aluminium.

6. The component of any preceding claim, wherein at least one of the aluminium-wettable outer layer and the aluminium-repellent layer comprises a refractory material that is obtainable from a heat treated slurry that comprises:
a) a colloidal and/or polymeric carrier that comprises colloidal and/or polymeric oxide of at least one metal;
b) suspended particles of the refractory metal compound that are covered with an integral film of oxide of the metal of the refractory metal compound, the oxide film being reactable upon heat treatment with said colloidal and/or polymeric oxide to form a mixed oxide comprised in said bonding mixed oxide; and
c) suspended metal oxide particles which are reactable upon heat treatment with said colloidal and/or polymeric oxide to form a mixed oxide comprised in said bonding mixed oxide,
wherein the bonding mixed oxide, including the mixed oxide formed from the reaction of the oxide film and the colloidal and/or polymeric oxide, consists of:
- a single mixed oxide when the metal of the suspended metal oxide particles is the same as the metal of the suspended refractory metal compound particles and the reactable oxide of said colloidal and/or polymeric oxide is an oxide of one metal only; or
- a plurality of miscible mixed oxides when at least one metal of the suspended metal oxide particles is different to the metal of the suspended refractory metal compound particles and/or when said colloidal and/or polymeric oxide comprises reactable oxides of different metals.

7. The component of claim 6, wherein the bonding mixed oxide comprises a mixed oxide of the metal(s) of said colloidal and/or polymeric oxide and at least one metal selected from titanium, silicon, chromium, vanadium, zirconium, hafnium, niobium, tantalum, molybdenum and cerium which is derived from the oxide film of said refractory metal compound suspended particles and/or said suspended metal oxide particles.

8. The component of claim 6 or 7, wherein said colloidal and/or polymeric oxide is selected from colloidal and/or polymeric alumina, ceria, lithia, magnesia, silica, thoria, yttria, zirconia, tin oxide and zinc oxide, and mixtures thereof.

9. The component of claim 8, wherein the refractory metal compound is titanium diboride and the bonding mixed oxide comprises titanium-aluminium mixed oxide.

10. The component of any one of claims 6 to 9, wherein the bonding mixed oxide constitutes at least 10 weight%, typically at least 30 weight% and preferably at least 50 weight%, of the oxide matrix.

11. The component of claim 10, wherein the oxide matrix further comprises: non-reacted particles of said colloidal and/or polymeric oxide; and/or non-reacted particles of said suspended metal oxide.

12. The component of any one of claims 6 to 11, wherein the bonding mixed oxide consists of a single mixed oxide.

13. The component of any one of claims 6 to 12, comprising a body coated with the refractory-material coating, the coating comprising at least two different grades of refractory compounds in one or more layers, the coating comprising in particular a plurality of layers, each layer containing only one grade of refractory metal compound.

14. The component of any one of claims 6 to 13, wherein the refractory material is producible from a colloidal and/or polymeric carrier that contains different grades of colloidal and/or polymeric particles.

15. The component of any preceding claim, which is a component of an aluminium electrowinning cell, the component being in particular: a cathode; part of a cell bottom or a cell sidewall.

16. The component of any one of claims 1 to 14, which is a holder for arc electrodes or a carbon arc electrode having at least one inactive surface coated with said refractory material and wetted by molten aluminium.

17. The component of any one of claims 1 to 14, which is a component of an apparatus for treating molten aluminium.

18. An apparatus for operation at high temperature which comprises at least one component as defined in any preceding claim that is exposed during operation to high temperature conditions.

19. The apparatus of claim 18, which is an aluminium electrowinning cell, said component being a cathode, a cell sidewall or part of a cell bottom.

20. The apparatus of claim 18, which is an arc furnace for treating steel, said component being a coated carbon arc electrode or a holder for arc electrodes wetted by molten aluminium.

21. The apparatus of claim 18, which is an apparatus for treating molten aluminium, said component being exposable to the molten aluminium and/or an oxidising media, said component being in particular exposable to moving contact with molten aluminium.

22. The apparatus of claim 21, wherein the component is a vessel for containing molten aluminium or a stirrer for stirring molten aluminium.

23. A method of producing aluminium in a cell as defined in claim 19 which contains alumina dissolved in a fluoride-containing molten electrolyte and in which said component is exposed to at least one of molten electrolyte, cathodically reduced aluminium and anodically evolved gas, the method comprising electrolysing the molten electrolyte containing the dissolved alumina to cathodically produce aluminium and anodically evolve gas, and optionally draining the cathodically produced aluminium from a drained cathode.

24. A method of treating iron or steel in a furnace as defined in claim 20 in which during operation said coated carbon arc electrode or holder for arc electrodes is exposed to a high temperature oxidising media, comprising passing an electric current through the electrode to produce molten iron.

25. A method of treating molten aluminium in an apparatus as defined in claim 22, comprising imparting a relative movement between the molten aluminium and said component.

## Patentansprüche

1. Komponente, die während des Gebrauchs geschmolzenem Aluminiuum ausgesetzt ist und einen Körper umfasst, der mit einer anhaftenden mehrschichtigen Schutzbeschichtung beschichtet ist, die während des Betriebs geschmolzenem Aluminium ausgesetzt ist, wobei die Schutzbeschichtung eine Außenschicht aufweist, die mit geschmolzenem Aluminium durch Eindringen desselben in die Außenschicht benetzbar ist, und eine Aluminium abweisenden Schicht darunter aufweist, die eine Sperre gegen geschmolzenes Aluminium auf dem Körper bildet, was verhindert, dass der Körper geschmolzenem Aluminium ausgesetzt wird.

2. Komponente nach Anspruch 1, bei der der Körper aus Kohlenstoff oder kohlenstoffhaltigem Material hergestellt ist.

3. Komponente nach Anspruch 1 oder 2, bei der die mit Aluminium benetzbare Außenschicht ein Benetzungsmittel enthält, das geschmolzenes Aluminium in die Beschichtung hineinzieht, insbesondere ein Benetzungsmittel ausgewählt aus Oxiden von Mangan, Eisen, Kobalt, Nickel, Kupfer, Zink, Molybdän, den Lanthaniden und seltenen Erdmetallen.

4. Komponente nach einem der Ansprüche 1 bis 3, bei der die Aluminium abweisende Schicht frei von irgendeinem Benetzungsmittel ist, wobei die Zusammensetzung der mit Aluminium benetzbaren Außenschicht insbesondere die Zusammensetzung der Aluminium abweisenden Schicht plus das mit Aluminium benetzbar machende Mittel aufweist.

5. Komponente nach einem der vorhergehenden Ansprüche, bei der die mit Aluminium benetzbare Außenschicht durch eine Startschicht bedeckt ist, die aus einer Aufschlämmung aufgebracht worden ist, die aus teilchenförmigem Benetzungsoxid in einem polymeren und/oder kolloidalen Bindemittel hergestellt worden ist, wobei die Startschicht bei Wärmebehandlung eine temporäre Schicht darstellt, die die mit Aluminium benetzbare Außenschicht schützt und die Benetzung des mit Aluminium benetzbaren feuerfesten Materials mit geschmolzenem Aluminium fördert.

6. Komponente nach einem der vorhergehenden Ansprüche, bei der mindestens eine der mit Aluminium benetzbaren Außenschicht und der Aluminium abweisenden Schicht ein feuerfestes Material umfasst, das aus der wärmebehandelten Aufschlämmung erhältlich ist, die umfasst:
a) einen kolloiden und/oder polymeren Träger, der kolloidales und/oder polymeres Oxid mindestens eines Metalls umfasst,
b) suspendierte Teilchen der feuerfesten Metallverbindung, die mit einem integralen Film aus Oxid des Metalls der feuerfesten Metallverbindung bedeckt ist, wobei der Oxidfilm bei Wärmebehandlung mit dem kolloidalen und/oder polymeren Oxid reaktionsfähig ist, unter Bildung eines gemischten Oxids, das in dem bindenden gemischten Oxid enthalten ist, und
c) suspendierte Metalloxidteilchen, die bei Wärmebehandlung mit dem kolloidalen und/oder polymeren Oxid reaktionsfähig sind, unter Bildung eines gemischten Oxids, das in dem bindenden gemischten Oxid enthalten ist,
wobei das bindende gemischte Oxid, das das gemischte Oxid enthält, das durch Umsetzung des Oxidfilms und des kolloidalen und/oder polymeren Oxids gebildet worden ist, aus
- einem einzigen gemischten Oxid besteht, wenn das Metall der suspendierten Metalloxidteilchen das Gleiche ist wie das Metall der suspendierten feuerfesten Metallverbindungsteilchen und das reaktionsfähige Oxid des kolloidalen und/oder polymeren Oxids ein Oxid von nur einem Metall ist, oder
- einer Vielfalt von mischbaren gemischten Oxiden besteht, wenn mindestens ein Metall der suspendierten Metalloxidteilchen von dem Metall der suspendierten feuerfesten Metallverbindungsteilchen verschieden ist und/oder wenn das kolloidale und/oder polymere Oxid reaktionsfähige Oxide verschiedener Metalle umfasst.

7. Komponente nach Anspruch 6, bei der das bindende gemischte Oxid ein gemischtes Oxid des Metalls (der Metalle) des kolloidalen und/oder polymeren Oxids und mindestens eines Metalls ausgewählt aus Titan, Silicium, Chrom, Vanadium, Zirkon, Hafnium, Niob, Tantal, Molybdän und Cer umfasst, das sich von dem Oxidfilm der suspendierten feuerfesten Metallverbindungsteilchen und/oder den suspendierten Metalloxidteilchen ableitet.

8. Komponente nach Anspruch 6 oder 7, bei der das kolloidale und/oder polymere Oxid ausgewählt ist aus kolloidalem und/oder polymeren Aluminiumoxid, Ceroxid, Lithiumoxid, Magnesiumoxid, Siliciumdioxid, Thoriumoxid, Yttriumoxid, Zirkoniumdioxid, Zinnoxid und Zinkoxid sowie Mischungen derselben.

9. Komponente nach Anspruch 8, bei der die feuerfeste Metallverbindung Titandiborid ist und das bindende gemischte Oxid Titan-Aluminium-Mischoxid umfasst.

10. Komponente nach einem der Ansprüche 1 bis 9, bei der das bindende gemischte Oxid mindestens 10 Gew.-%, typischerweise mindestens 30 Gew.-% und vorzugsweise mindestens 50 Gew.-% der Oxidmatrix bildet.

11. Komponente nach Anspruch 10, bei der die Oxidmatrix ferner nicht-umgesetzte Teilchen des kolloidalen und/oder polymeren Oxids und/oder nicht-umgesetzte Teilchen des suspendierten Metalloxids umfasst.

12. Komponente nach einem der Ansprüche 6 bis 11, bei dem das bindende gemischte Oxid aus einem einzigen Mischoxid besteht.

13. Komponente nach einem der Ansprüche 6 bis 12, die einen Körper umfasst, der mit einer Beschichtung aus feuerfestem Material beschichtet ist, wobei die Beschichtung mindestens zwei verschiedene Qualitäten von feuerfesten Verbindungen in einer oder mehreren Schichten umfasst, wobei die Beschichtung insbesondere eine Vielzahl von Schichten umfasst, wobei jede Schicht nur eine Qualität von feuerfester Metallverbindung enthält.

14. Komponente nach einem der Ansprüche 6 bis 13, bei der das feuerfeste Material aus einem kolloidalen und/oder polymeren Träger herstellbar ist, der verschiedene Qualitäten von kolloidalen und/oder polymeren Teilchen enthält.

15. Komponente nach einem der vorhergehenden Ansprüche, die eine Komponente einer Zelle zum elektrolytischen Gewinnen von Aluminium ist, wobei die Komponente insbesondere eine Kathode, ein Teil eines Zellbodens oder eine Zellseitenwand ist.

16. Komponente nach einem der Ansprüche 6 bis 14, die ein Halter für Bogenelektroden oder einer Kohlenbogenelektrode mit mindestens einer inaktiven Oberfläche ist, die mit dem feuerfesten Material beschichtet ist und durch geschmolzenes Aluminium benetzt ist.

17. Komponente nach einem der Ansprüche 6 bis 14, die eine Komponente einer Vorrichtung zum Behandeln von geschmolzenem Aluminium ist.

18. Vorrichtung zum Betrieb bei hoher Temperatur, die mindestens eine Komponente gemäß einem der vorhergehenden Ansprüche umfasst, die während des Betriebs Hochtemperaturbedingungen ausgesetzt ist.

19. Vorrichtung nach Anspruch 18, die eine Zelle zum elektrolytischen Gewinnen von Aluminium ist, wobei die Komponente eine Kathode, eine Zellseitenwand oder ein Teil eines Zellbodens ist.

20. Vorrichtung nach Anspruch 18, die ein Bogenofen zum Behandeln von Stahl ist, wobei die Komponente eine beschichtete Kohlenbogenelektrode oder ein Halter für Bogenelektroden ist, die/der durch geschmolzenes Aluminium benetzt ist.

21. Vorrichtung nach Anspruch 18, die eine Vorrichtung zum Behandeln von geschmolzenem Aluminium ist, wobei die Komponente dem geschmolzenen Aluminium und/oder einem oxidierenden Medium ausgesetzt werden kann, wobei die Komponente insbesondere einen sich bewegenden Kontakt mit geschmolzenem Aluminium ausgesetzt werden kann.

22. Vorrichtung nach Anspruch 21, bei der die Komponente ein Gefäß zur Aufnahme von geschmolzenem Aluminium oder ein Rührer zum Rühren von geschmolzenem Aluminium ist.

23. Verfahren zur Herstellung von Aluminium in einer Zelle gemäß Anspruch 19, die Aluminiumoxid gelöst in einem Fluorid enthaltenden geschmolzenen Elektrolyten enthält, bei dem die Komponente mindestens einem von geschmolzenem Elektrolyten, kathodisch reduziertem Aluminium und anodisch freigesetztem Gas ausgesetzt ist, wobei das Verfahren die Elektrolysierung des geschmolzenen Elektrolyten umfasst, der das gelöste Aluminiumoxid enthält, um kathodisch Aluminium herzustellen und anodisch Gas zu entwickeln, und gegebenenfalls das Drainieren von kathodisch hergestelltem Aluminium von einer drainierten Kathode.

24. Verfahren zur Behandlung von Eisen oder Stahl in einem Ofen gemäß Anspruch 20, bei dem während des Betriebs die beschichteten Kohlenbogenelektroden oder der Halter für Bogenelektroden einem Hochtemperaturoxidationsmedium ausgesetzt ist, wobei ein elektrischer Strom durch die Elektrode zur Herstellung von geschmolzenem Eisen geführt wird.

25. Verfahren zur Behandlung von geschmolzenem Aluminium in einer Vorrichtung gemäß Anspruch 22, bei dem zwischen dem geschmolzenen Aluminium und der Komponente eine relative Bewegung vermittelt wird.

## Revendications

1. Composant qui, pendant l'utilisation, est exposé à de l'aluminium fondu, comprenant un corps revêtu d'un revêtement protecteur adhérent à plusieurs couches qui, pendant le fonctionnement, est exposé à l'aluminium fondu, le revêtement protecteur ayant une couche externe qui est mouillable par l'aluminium fondu par pénétration de celui-ci dans la couche externe, et une couche repoussant l'aluminium au-dessous formant une barrière vis-à-vis de l'aluminium fondu sur le corps qui empêche l'exposition du corps à l'aluminium fondu.

2. Composant de la revendication 1, dans lequel le corps est réalisé en carbone ou en un matériau contenant du carbone.

3. Composant de la revendication 1 ou 2, dans lequel la couche externe mouillable par l'aluminium contient un agent mouillant qui aspire l'aluminium fondu dans le revêtement, en particulier un agent mouillant choisi parmi des oxydes de manganèse, fer, cobalt, nickel, cuivre, zinc, molybdène, les lanthanides et les métaux des terres rares.

4. Composant d'une quelconque des revendications 1 à 3, dans lequel la couche repoussant l'aluminium est dépourvue d'un quelconque agent mouillant, la composition de la couche externe mouillable par l'aluminium ayant en particulier la composition de la couche repoussant l'aluminium plus l'agent mouillant l'aluminium.

5. Composant d'une quelconque revendication précédente, dans lequel la couche externe mouillable par l'aluminium est recouverte d'une couche de départ appliquée à partir d'un coulis réalisé en oxyde mouillant particulaire dans un liant polymère et/ou colloïdal, la couche de départ constituant, lors d'un traitement thermique, une couche temporaire protégeant la couche externe mouillable par l'aluminium et favorisant le mouillage du matériau réfractaire mouillable par l'aluminium par l'aluminium fondu.

6. Composant d'une quelconque revendication précédente, dans lequel au moins l'une de la couche externe mouillable par l'aluminium et de la couche repoussant l'aluminium comprend un matériau réfractaire qui peut être obtenu à partir d'un coulis traité thermiquement qui comprend :
a) un support colloïdal et/ou polymère qui comprend un oxyde colloïdal et/ou polymère d'au moins un métal ;
b) des particules en suspension du composé métallique réfractaire qui sont recouvertes d'un film continu ou intégré d'oxyde du métal du composé métallique réfractaire, le film d'oxyde pouvant réagir, lors d'un traitement thermique, avec ledit oxyde colloïdal et/ou polymère pour former un oxyde mélangé compris dans ledit oxyde mélangé de liaison ; et
c) des particules d'oxyde métallique en suspension qui peuvent réagir, lors d'un traitement thermique, avec ledit oxyde colloïdal et/ou polymère pour former un oxyde mélangé compris dans ledit oxyde mélangé de liaison,
dans lequel l'oxyde mélangé de liaison, incluant l'oxyde mélangé formé à partir de la réaction du film d'oxyde et de l'oxyde colloïdal et/ou polymère, se compose de :
- un oxyde mélangé unique quand le métal des particules d'oxyde métallique en suspension est le même que le métal des particules du composé métallique réfractaire en suspension et quand l'oxyde pouvant réagir dudit oxyde colloïdal et/ou polymère est un oxyde d'un seul métal ; ou
- une pluralité d'oxydes mélangés miscibles quand au moins un métal des particules d'oxyde métallique en suspension est différent du métal des particules du composé métallique réfractaire en suspension et/ou quand ledit oxyde colloïdal et/ou polymère comprend des oxydes de différents métaux pouvant réagir.

7. Composant de la revendication 6, dans lequel l'oxyde mélangé de liaison comprend un oxyde mélangé du métal ou des métaux dudit oxyde colloïdal et/ou polymère et au moins un métal choisi parmi le titane, le silicium, le chrome, le vanadium, le zirconium, l'hafnium, le niobium, le tantale, le molybdène et le cérium qui est dérivé du film d'oxyde desdites particules en suspension du composé métallique réfractaire et/ou desdites particules d'oxyde métallique en suspension.

8. Composant de la revendication 6 ou 7, dans lequel ledit oxyde colloïdal et/ou polymère est choisi à partir d'alumine, d'oxyde de cérium, de lithine, de magnésie, de silice, de thorine, d'yttria, de zircone, d'oxyde d'étain et d'oxyde de zinc colloïdaux et/ou polymères et de mélanges de ceux-ci.

9. Composant de la revendication 8, dans lequel le composé métallique réfractaire est du diborure de titane et l'oxyde mélangé de liaison comprend un oxyde mélangé titane-aluminium.

10. Composant d'une quelconque des revendications 6 à 9, dans lequel l'oxyde mélangé de liaison constitue au moins 10% en poids, typiquement au moins 30% en poids et, de préférence, au moins 50% en poids, de la matrice d'oxydes.

11. Composant de la revendication 10, dans lequel la matrice d'oxydes comprend de plus : des particules n'ayant pas réagi dudit oxyde colloïdal et/ou polymère ; et/ou des particules n'ayant pas réagi dudit oxyde métallique en suspension.

12. Composant d'une quelconque des revendications 6 à 11, dans lequel l'oxyde mélangé de liaison se compose d'un oxyde mélangé unique.

13. Composant d'une quelconque des revendications 6 à 12, comprenant un corps revêtu du revêtement en matériau réfractaire, le revêtement comprenant au moins deux qualités différentes de composés réfractaires en une ou plusieurs couches, le revêtement comprenant en particulier une pluralité de couches, chaque couche contenant une seule qualité de composé métallique réfractaire.

14. Composant d'une quelconque des revendications 6 à 13, dans lequel le matériau réfractaire peut être produit à partir d'un support colloïdal et/ou polymère qui contient différentes qualités de particules colloïdales et/ou polymères.

15. Composant d'une quelconque revendication précédente, qui est un composant d'une cellule d'électro-obtention d'aluminium, le composant étant en particulier : une cathode ; une partie du fond de la cellule ou une paroi latérale de la cellule.

16. Composant d'une quelconque des revendications 1 à 14, qui est un support pour des électrodes à arc ou une électrode à arc en carbone ayant au moins une surface inactive revêtue dudit matériau réfractaire et mouillée par l'aluminium fondu.

17. Composant d'une quelconque des revendications 1 à 14, qui est un composant d'un appareil pour traiter de l'aluminium fondu.

18. Appareil pour fonctionner à haute température, qui comprend au moins un composant tel que défini dans une quelconque revendication précédente, qui est exposé, pendant le fonctionnement, à des conditions de température élevée.

19. Appareil de la revendication 18, qui est une cellule d'électro-obtention d'aluminium, ledit composant étant une cathode, une paroi latérale de la cellule ou une partie d'un fond de la cellule.

20. Appareil de la revendication 18, qui est un four à arc pour le traitement de l'acier, ledit composant étant une électrode à arc en carbone revêtu ou un support pour des électrodes à arc mouillées par l'aluminium fondu.

21. Appareil de la revendication 18, qui est un appareil pour le traitement de l'aluminium fondu, ledit composant pouvant être exposé à l'aluminium fondu et/ou à un milieu oxydant, ledit composant pouvant être, en particulier, exposé à un contact en mouvement avec l'aluminium fondu.

22. Appareil de la revendication 21, dans lequel le composant est un récipient pour contenir de l'aluminium fondu ou un mélangeur pour agiter de l'aluminium fondu.

23. Procédé pour produire de l'aluminium dans une cellule telle que définie dans la revendication 19 qui contient de l'alumine dissoute dans un électrolyte fondu contenant du fluorure et dans laquelle ledit composant est exposé à au moins l'un de l'électrolyte fondu, de l'aluminium réduit de façon cathodique et du gaz émis de façon anodique, le procédé consistant à électrolyser l'électrolyte fondu contenant l'alumine dissoute pour produire de l'aluminium de façon cathodique et à dégager du gaz de façon anodique, et éventuellement à drainer l'aluminium produit de façon cathodique à partir d'une cathode drainée.

24. Procédé de traitement du fer ou de l'acier dans un four tel que défini dans la revendication 20, dans lequel, pendant le fonctionnement, ladite électrode à arc en carbone enrobée ou ledit support pour les électrodes à arc est exposée à un milieu oxydant à température élevée consistant à faire passer un courant électrique à travers l'électrode pour produire du fer fondu.

25. Procédé de traitement de l'aluminium fondu dans un appareil tel que défini dans la revendication 22, consistant à imprimer un mouvement relatif entre l'aluminium fondu et ledit composant.
